# FASCICULE DE BREVET EUROPEEN

(11) **EP 3 292 342 B1**
(45) Date de publication et mention de la délivrance du brevet: **19.06.2019**
(21) Numéro de dépôt: 15763549.1
(22) Date de dépôt: 09.09.2015
(51) Int. Cl.: F16L 55/30, F16L 55/40, F16L 55/32, G21C 17/017, B63H 1/12, B63H 19/08, B63H 21/17, F16L 101/30

(54) **DISPOSITIF D'INSPECTION DE CANALISATIONS À PROPULSION PAR VIS D'ARCHIMÈDE**
VORRICHTUNG ZUR INSPEKTION VON LEITUNGEN MIT ANTRIEB DURCH ARCHIMEDISCHE SCHRAUBEN
DEVICE FOR THE INSPECTION OF CONDUITS WITH ARCHIMEDEAN SCREW PROPULSION

(30) Priorité: 07.05.2015 FR 1554098
(43) Date de publication de la demande: 14.03.2018
(73) Titulaire: Commissariat à l'Énergie Atomique et aux Énergies Alternatives, 75015 Paris (FR)
(72) Inventeur: SOUVESTRE, Florent, F-91400 Orsay (FR)
(74) Mandataire: Brevalex
(86) Numéro de dépôt international: PCT/EP2015/070612
(87) Numéro de publication internationale: WO 2016/177436

(56) Documents cités:
- WO-A1-00/63606
- DE-A1-102004 006 855
- JP-A- 2005 084 412
- US-A- 4 676 310

## Description

### DOMAINE TECHNIQUE

Le domaine de l'invention est celui des dispositifs robotiques d'inspection de canalisations, telles que des canalisations d'eaux usées et d'eaux de pluie ou des canalisations industrielles. L'invention concerne plus particulièrement un dispositif propulsé au moyen de vis d'Archimède apte à se mouvoir dans des canalisations en présence d'eau, de sable, de graisse ou de boue et qui présente l'avantage de supporter un retournement accidentel.

### ÉTAT DE LA TECHNIQUE ANTÉRIEURE

Des dispositifs mécatroniques mobiles sont utilisés pour évoluer à l'intérieur de canalisations de réseaux urbains ou industriels afin d'en réaliser une inspection au moyen, notamment, de prise de photographies.

La fonction locomotion de tels dispositifs est généralement assurée par des roues ou des chenilles. Mais afin d'éviter des situations de blocage de tels dispositifs, la canalisation doit généralement être curée à l'aide de jet haute pression avant le passage du dispositif. Par ailleurs, dans le cas où le dispositif viendrait à se retourner du fait, par exemple, de la présence d'un obstacle, celui-ci ne peut poursuivre sa progression et une opération de récupération manuelle doit être mise en oeuvre. Ces opérations de curage et de récupération engendrent des coûts importants.

Le document WO 00/63606 A1 divulgue un véhicule destiné à un tuyau, ayant un générateur d'énergie entraîné par du fluide qui s'écoule au-delà du générateur et un ou plusieurs moyens d'entraînement. L'énergie provenant du générateur est utilisée pour actionner le moyen d'entraînement afin de déplacer le véhicule. Le moyen d'entraînement peut comporter deux bras hélicoïdaux.

Le document DE 10 2004 006855 A1 divulgue une unité d'entraînement pour la propulsion dans un conduit. L'unité d'entraînement comporte un module d'entraînement, une caméra d'inspection, des outils de traitement et / ou d'inspection reliés entre eux au moyen d'un tube de liaison. Le module d'entraînement présente une rotation avec une spirale d'entraînement et / ou des rainures d'entraînement.

Des engins entraînés au moyen de vis d'Archimède ont été développés afin de progresser sur des terrains mous ou humides, tels que la boue, la neige ou l'eau, ainsi que sur des sols durs. Cette faculté à pouvoir évoluer quel que soit le milieu rencontré en fait un mode de locomotion tout-terrain adapté à une progression à l'intérieur de canalisations.

La société Steady Flux, Inc. a proposé ainsi un dispositif, dénommé CBOR, d'inspection de canalisations exploitant une telle propulsion par vis d'Archimède (voir https://web.archive.org/web/20141202020252/http://steadyftux.com:80/products/cbor/). Ce dispositif comprend une paire d'éléments de propulsion comprenant chacun un tambour rotatif dont une surface extérieure présente un filetage de vis d'Archimède, et un module central couplé à chacun des éléments de propulsion au moyen de bras de support. Du fait de sa conception avec un module central positionné au-dessus des éléments de propulsion, ce dispositif ne tolère pas un retournement accidentel « sur le dos ». Dans un tel cas de figure, une récupération manuelle doit toujours être réalisée.

### EXPOSÉ DE L'INVENTION

L'invention a pour objectif de proposer un dispositif mobile d'inspection de canalisations qui soit à la fois tout-terrain en ce sens qu'il peut progresser quel que soit le milieu rencontré dans les canalisations, et capable de poursuivre sa progression malgré un retournement accidentel sur le dos.

L'invention propose à cet effet un dispositif robotique d'inspection d'une canalisation, comportant au moins une paire d'éléments de propulsion comprenant chacun un tambour rotatif dont une surface extérieure présente un filetage de vis d'Archimède. Les éléments de propulsion d'une paire s'étendent dans une direction longitudinale de manière à être symétriques entre eux par rapport à un plan sagittal médian du dispositif.

Le dispositif comporte en outre un corps associé à l'au moins une paire d'éléments de propulsion et dans lequel sont logés au moins un capteur, au moins une paire de moteurs électriques pour chacun faire tourner un tambour rotatif et au moins une paire de sources d'énergie électrique pour chacune alimenter un moteur électrique. Le corps est conformé de manière à ce qu'une partie ventrale et une partie dorsale du dispositif soient symétriques entre elles par rapport à un plan frontal médian du dispositif, autorisant ainsi un déplacement du dispositif indifféremment sur le ventre ou sur le dos au moyen de l'au moins une paire d'éléments de propulsion.

Certains aspects préférés mais non limitatifs de ce dispositif sont les suivants :
- les éléments de propulsion sont des flotteurs ;
- le filetage présent sur la surface extérieure d'un tambour rotatif comporte des portions angulaires de hauteur nulle à intervalles angulaires de 360°;
- le corps comporte en outre un réceptacle pour une carte électronique de contrôle-commande ;
- il comprend une première et une deuxième paire d'éléments de propulsions agencées de manière à être symétriques entre elles par rapport à un plan transversal médian du dispositif ;
- le corps comprend au moins une paire de portions cylindriques de diamètre inférieur à celui des tambours rotatifs, les portions cylindriques d'une paire s'étendant dans la direction longitudinale et étant reliées entre elles par une portion de jonction transversale qui présente une hauteur dans le plan sagittal médian inférieur au diamètre des tambours rotatifs, et le corps comprend en outre un compartiment dans lequel est logé l'au moins un capteur, le compartiment s'étendant depuis la portion de jonction dans la direction longitudinale entre les éléments de propulsion ;
- chaque portion cylindrique forme un logement longitudinal monté à l'intérieur d'un tambour rotatif et aménagé pour accueillir un moteur électrique pour faire tourner le tambour rotatif correspondant et une source d'énergie électrique pour alimenter le moteur électrique ;
- le corps comprend une paire de portions cylindriques, et la portion de jonction transversale comprend une paire de logements transversaux chacun aménagé pour accueillir un moteur électrique, au moins une source d'énergie électrique étant logée dans le compartiment.

L'invention porte également sur l'utilisation du dispositif pour réaliser l'inspection d'une canalisation.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est une vue en éclaté d'un dispositif selon un premier mode de réalisation possible de l'invention ;
- la figure 2 est une coupe, vue en perspective, d'un élément de propulsion d'un dispositif selon le premier mode de réalisation possible de l'invention ;
- la figure 3 représente une réalisation possible d'un système de prise de vue embarqué dans un dispositif selon l'invention ;
- les figures 4 et 5 représentent un dispositif selon un second mode de réalisation possible de l'invention ;
- les figures 6a, 6b et 6c sont des vues d'un dispositif selon une variante de réalisation de l'invention dans laquelle des roues sont intégrées dans le filetage en surface d'un tambour rotatif ;
- les figures 7a et 7b représente le mouvement vertical induit par la présence des roues dans le filetage ;
- la figure 8 représente une autre variante de réalisation de l'invention du dispositif dans laquelle le filetage est monté de manière amovible sur la surface d'un tambour rotatif.

Sur les différentes figures, les éléments identiques portent les mêmes références.

### EXPOSÉ DÉTAILLÉ DE MODES DE RÉALISATION PARTICULIERS

L'invention porte sur un dispositif robotique d'inspection d'une canalisation, telle qu'une canalisation de réseau urbain ou une canalisation d'une installation industrielle.

La propulsion du dispositif est assurée par des vis d'Archimède entrainées en rotation à l'aide de moteurs en entrainement direct. Une telle propulsion permet au dispositif d'être tout-terrain en ce sens qu'il peut progresser à l'intérieur d'une canalisation quel que soit le milieu rencontré, aussi bien en contact avec le fond de la canalisation qu'en présence d'eau, de boue, de graisse ou de sable.

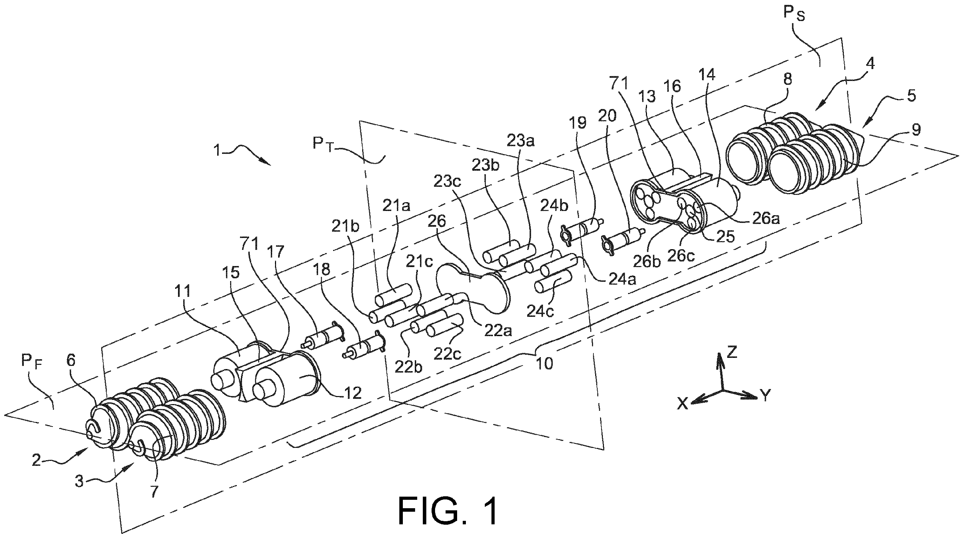

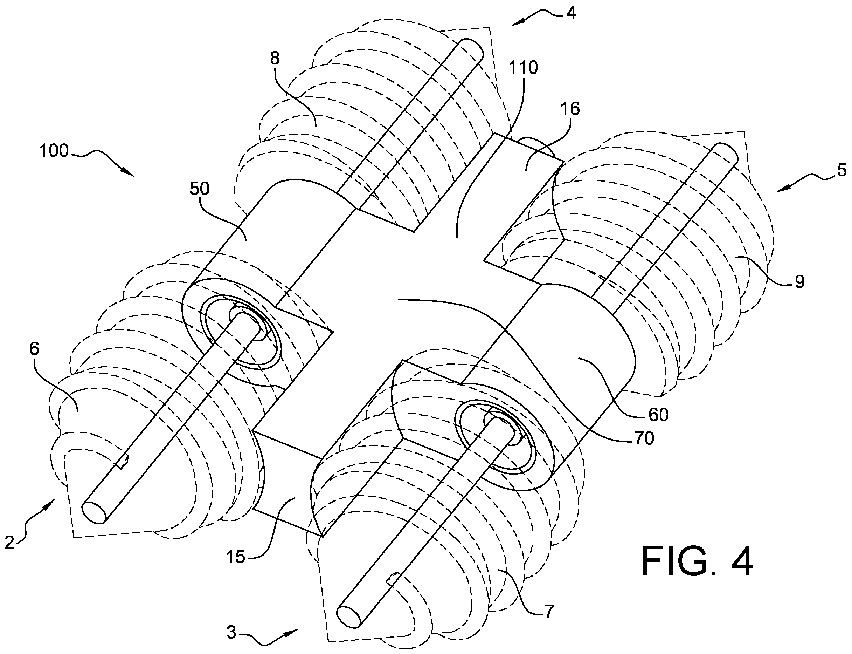

Les figures 1 et 4 représentent deux modes de réalisation possible d'un dispositif 1, 100 selon l'invention. Le dispositif 1, 100 comporte au moins une paire d'éléments de propulsion 2, 3 ; 4, 5 comprenant chacun un tambour rotatif 6, 7 ; 8, 9 dont une surface extérieure présente un filetage de vis d'Archimède.

Les éléments de propulsion d'une paire s'étendent dans une direction longitudinale, selon l'axe X, de manière à être symétriques entre eux par rapport à un plan sagittal médian Ps du dispositif. Par plan sagittal médian Ps du dispositif, on entend un plan vertical (axe Z) par rapport au sol (plan X-Y) s'étendant selon la direction longitudinale du dispositif en en séparant la moitié gauche de la moitié droite.

Chaque tambour rotatif prend typiquement la forme d'un cylindre creux, ouvert à une première extrémité et se terminant à son autre extrémité par un cône.

Le filetage d'une paire de tambours rotatifs 6, 7 ; 8, 9 est tel que l'un présente un filetage à gauche et l'autre présente un filetage à droite. Par exemple, la surface extérieure du tambour rotatif droit (tel que vu dans la direction de l'axe X) présente un filetage à gauche et la surface extérieure du tambour rotatif gauche présente un filetage à droite. Lorsque l'on a recours à deux paires de tambours, les tambours droits peuvent présenter le même filetage, les tambours gauches présentant alors le filetage opposé.

Dans un mode de réalisation privilégié, les éléments de propulsion sont des flotteurs. A cet effet, les tambours rotatifs sont étanches et de taille suffisante (notamment en ce sens qu'une poche d'air est présente là où l'espace intérieur n'est pas occupé) pour permettre au dispositif de flotter sur l'eau. Dans un tel cas de figure, les filetages à vis d'Archimède permettent également au dispositif de se déplacer sur l'eau à la manière d'une hélice.

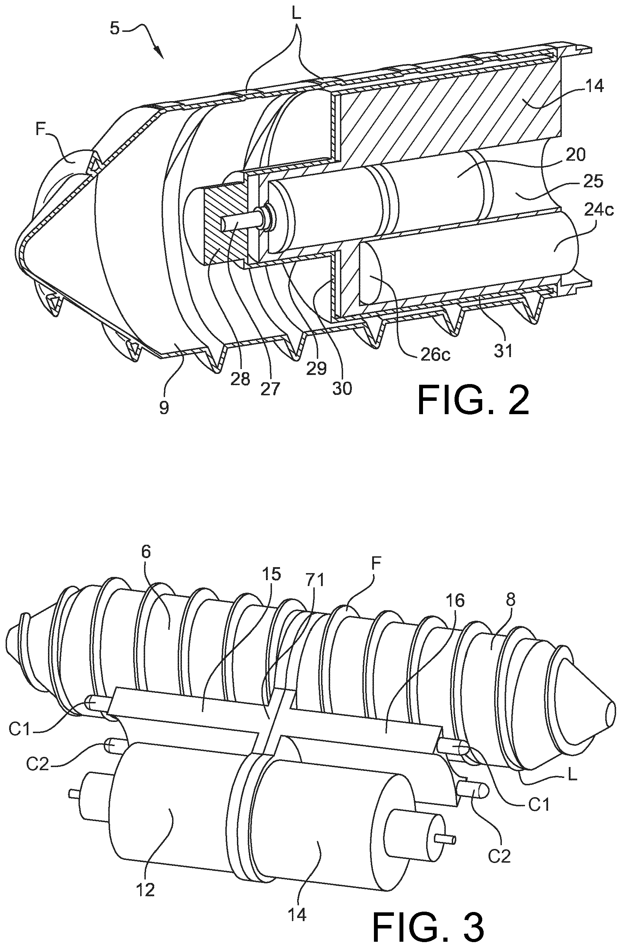

Dans un autre mode de réalisation privilégié, et comme représenté sur les figures 2 et 3, le filetage F présent sur la surface extérieure d'un tambour rotatif 4, 5 comporte des portions angulaires L de hauteur nulle à intervalles angulaires de 360°. Ces portions angulaires L sont ainsi équi-réparties le long du filetage avec une portion angulaire L par pas du filetage, tout au moins pour ce qui concerne le filetage situé sur la partie cylindrique du tambour rotatif. Pour ce faire, le filetage peut présenter une hauteur variable avec des régions d'atténuation régulière de la hauteur de part et d'autre de chacune des portions angulaires L de hauteur nulle.

De telle manière, la surface extérieure d'un tambour présente une bande lisse dénuée de filetage qui s'étend dans la direction longitudinale. Cette bande lisse permet de faciliter la progression du dispositif en limitant les résistances provoquées par le frottement avec le fond de la canalisation et en minimisant le tirant d'eau. Le dispositif peut alors se laisser porter par le courant naturel de l'eau sans consommer d'énergie.

Le dispositif 1, 100 comporte en outre un corps 10, 110 associé à l'au moins une paire d'éléments de propulsion et dans lequel sont logés au moins un capteur, au moins une paire de moteurs électriques pour chacun faire tourner un tambour rotatif et au moins une paire de sources d'énergie électrique pour chacune alimenter un moteur électrique.

L'au moins un capteur peut être un système de prise de vue, par exemple une caméra, notamment une caméra directionnelle, ou un appareil photographique. L'invention n'est toutefois pas limitée à un type de capteur particulier, et s'étend à tout type de capteur apte à observer une grandeur physique avec ou sans contact avec l'environnement, comme par exemple un capteur de température ou un capteur de pH.

Le corps 10, 110 est par ailleurs conformé de manière à ce qu'une partie ventrale et une partie dorsale du dispositif soient symétriques entre elles par rapport à un plan frontal médian P_{F} du dispositif. Par plan frontal moyen P_{F} du dispositif, on entend un plan parallèle au sol, perpendiculaire au plan sagittal médian Ps, et qui sépare la moitié inférieure, ou ventrale, du dispositif de la moitié supérieure, ou dorsale, du dispositif. Du fait de cette configuration géométrique, le dispositif tolère un renversement accidentel puisqu'il peut se déplacer aussi bien sur « le ventre » que sur « le dos » au moyen de l'au moins une paire d'éléments de propulsion.

Comme représenté sur les figures 1 et 4, le corps 10, 110 peut comprendre au moins une paire de portions cylindriques 11, 12, 13, 14, 50, 60 de diamètre inférieur à celui des tambours rotatifs 6, 7, 8, 9. Les portions cylindriques d'une paire s'étendent dans la direction longitudinale et sont chacune agencées co-axialement avec un tambour rotatif d'une paire d'éléments de propulsion. Elles sont reliées entre elles par une portion de jonction transversale 71, 70 qui présente une hauteur dans le plan sagittal médian Ps inférieur au diamètre des tambours rotatifs. Les portions cylindriques et la portion de jonction forment ainsi un ensemble qui présente une forme générale d'une paire de jumelles optiques.

Le corps 10, 110 comprend en outre un compartiment 15, 16 dans lequel est logé l'au moins un capteur. Le compartiment 15, 16 s'étend depuis la portion de jonction transversale 71, 70 dans la direction longitudinale entre les éléments de propulsion 2, 3 ; 4, 5.

L'au moins un capteur est ainsi accueilli dans un espace situé entre les éléments de propulsion, dont la dimension selon l'axe Z est inférieure ou égale au diamètre des tambours rotatifs. La dimension selon l'axe Y peut quant à elle varier dans des plans parallèles au plan frontal médian P_{F} pour permettre aux tambours rotatifs d'être proches l'un de l'autre et donc de gagner en compacité. Notamment, la dimension selon l'axe Y peut être minimale au niveau du plan frontal médian P_{F}, puis augmenter progressivement au fur et à mesure que l'on s'éloigne de ce plan frontal médian P_{F} vers le dessus, respectivement vers le dessous, du dispositif, cette augmentation progressive permettant d'épouser le contour cylindrique des tambours rotatifs.

Dans un premier mode de réalisation illustré sur les figures 1 à 3, un moteur électrique et une source d'énergie sont associés à chacun des tambours rotatifs et agencés à l'intérieur même du tambour rotatif correspondant.

Dans ce premier mode de réalisation, chaque portion cylindrique d'une paire de portions cylindriques du corps 10 forme un logement longitudinal 11, 12 ; 13, 14 aménagé pour accueillir un moteur électrique 17, 18 ; 19, 20 pour faire tourner le tambour rotatif correspondant et une source d'énergie électrique 21a-21c, 22a-22c ; 23a-23c, 24a-24c pour alimenter le moteur électrique.

Chaque logement longitudinal 11, 12 ; 13, 14 d'une paire est monté à l'intérieur d'un tambour rotatif 6, 7 ; 8, 9 d'une paire d'éléments de propulsion de manière à ce que le compartiment 15 ; 16 soit agencé entre les éléments de propulsion 2, 3; 4, 5 au niveau du plan sagittal médian Ps.

Un moteur électrique et une source d'énergie électrique sont ainsi intégrés dans chaque tambour rotatif, et l'au moins un capteur est agencé entre les tambours. De telle manière, le dispositif ne nécessite pas de module(s) supplémentaire(s) pour accueillir ces éléments et sa forme extérieure correspond à celle des tambours rotatifs. De telle manière, le dispositif présente une symétrie par rapport à un plan frontal moyen P_{F} du dispositif.

Comme représenté sur la figure 1, un tambour rotatif prend la forme d'un cylindre creux, ouvert à une première extrémité pour accueillir un logement et se terminant à son autre extrémité par un cône. Un logement longitudinal présente une forme cylindrique complémentaire de celle du tambour de manière à pouvoir y être engagé. Un logement longitudinal peut notamment être composé d'une base cylindrique surmontée d'un cylindre de plus faible diamètre.

Le corps 10 présente une base supportant une paire de logements 11, 12 et un compartiment 15, la base pouvant inclure un réceptacle pour une carte électronique 26 de contrôle-commande de la source d'énergie électrique, du moteur électrique et du capteur.

Afin d'autoriser le maximum de degrés de liberté et de permettre à l'engin de se mouvoir dans toutes les directions, les différents tambours rotatifs sont entrainés indépendamment par des moteurs électriques pouvant tourner dans les deux directions.

La figure 3 illustre un mode de réalisation dans lequel chaque compartiment 15, 16 permet d'accueillir deux capteurs, par exemple deux caméras C1, C2. Une première caméra C1 peut pointer vers le dessus, tandis que la deuxième caméra C2 pointe vers le dessous (et vice-versa selon que le dispositif évolue sur le ventre ou sur le dos). Dans un autre mode de réalisation, chaque compartiment 15, 16 accueille trois caméras avec, en sus des deux caméras C1, C2 pointant vers le dessus et vers le dessous, une caméra additionnelle pointant vers l'avant, respectivement vers l'arrière, et dont l'axe optique est parallèle à l'axe de révolution de la canalisation.

La source d'énergie électrique d'un moteur peut comprendre une pluralité de batteries, par exemple trois batteries comme représenté sur la figure 1. Chaque logement longitudinal 11-14 du corps 10 comporte alors un espace de réception d'un moteur électrique et un espace de réception de chacune des batteries. Prenant l'exemple du logement longitudinal 14, les espaces de réception 26a, 26b, 26c des batteries 24a, 24b, 24c peuvent être agencés de manière équi-répartie le long d'une circonférence entourant l'espace de réception 25 du moteur électrique 20.

La figure 2 représente, vue en perspective, une coupe selon le plan sagittal médian Ps d'un élément de propulsion 5 selon le premier mode de réalisation possible du dispositif selon l'invention. L'élément de propulsion 5 comprend le tambour rotatif 9 dans lequel est inséré le logement longitudinal 14. Le logement longitudinal 14 comprend un espace de réception 25 du moteur 20 et on retrouve sur la figure 2 un espace de réception 26c de l'une des batteries 24c. Le logement 14 est composé d'une base cylindrique surmontée d'un cylindre de plus faible diamètre formant un épaulement et duquel dépasse un arbre 27 entraîné en rotation par le moteur 20.

Le tambour 9 dispose dans son volume interne d'une pièce d'entraînement cylindrique 28 qui présente un alésage en ajustement serré avec l'arbre 27 de manière à permettre l'entraînement en rotation du tambour 14. La pièce d'entraînement cylindrique 28 est effectivement solidaire de la surface extérieure du tambour 9 via des parois d'un espace de réception du logement 14 dans le tambour 9. On retrouve plus précisément une paroi 29 solidaire de la pièce d'entraînement cylindrique 28 et qui épouse la partie avant du logement 14, une paroi 30 qui sert de butée pour l'épaulement du logement 14 et une paroi 31 solidaire de la surface extérieure du tambour et qui s'étend dans la direction longitudinale pour épouser la forme de la base cylindrique du logement 14. Ces parois 29, 30, 31 délimitent dans le volume interne du tambour 14 un espace arrière d'un espace avant. L'espace arrière creux est utilisé pour la réception du logement 14 et l'espace avant également creux sert de poche d'air pour assurer la flottaison.

Dans un mode de réalisation possible, le dispositif peut ne comprendre qu'une seule paire d'éléments de propulsion et un corps doté d'une seule paire de logement longitudinal. Dans un autre mode de réalisation possible représenté sur les figures 1-3, le dispositif comprend une première et une deuxième paire d'éléments de propulsions agencées de manière à être symétrique entre elles par rapport à un plan transversal médian P_{T} du dispositif. Par plan transversal médian, on entend un plan vertical par rapport au sol, perpendiculaire au plan sagittal médian Ps, qui sépare la moitié avant du dispositif de la moitié arrière du dispositif. Avec cette troisième symétrie, la robustesse du dispositif se voit améliorée.

Par ailleurs, la présence de quatre tambours rotatifs permet une rotation facilitée du dispositif, avec un rayon de braquage plus court. Elle s'accompagne en outre d'une répartition distribuée de la puissance sans avoir recours à des mécanismes de transmission, résultant en un meilleur rendement propulsif global ainsi qu'en une meilleure répartition des charges.

Dans ce mode de réalisation, le corps 10 comprend deux paires de logements longitudinaux et un capteur accueilli dans le compartiment 15, 16 agencé entre les logements de chacune des paires, le corps étant aménagé au niveau du plan transversal médian P_{T}. Comme représenté sur la figure 1, le corps peut se décomposer en deux sous-parties symétriques par rapport au plan transversal médian P_{T}, chaque sous-partie étant dédiée à l'une des paires d'éléments de propulsion.

Le réceptacle pour carte électronique de contrôle-commande peut être aménagé à une interface entre les deux paires de logements, par exemple dans un espace formé à la liaison entre les deux sous-parties du corps.

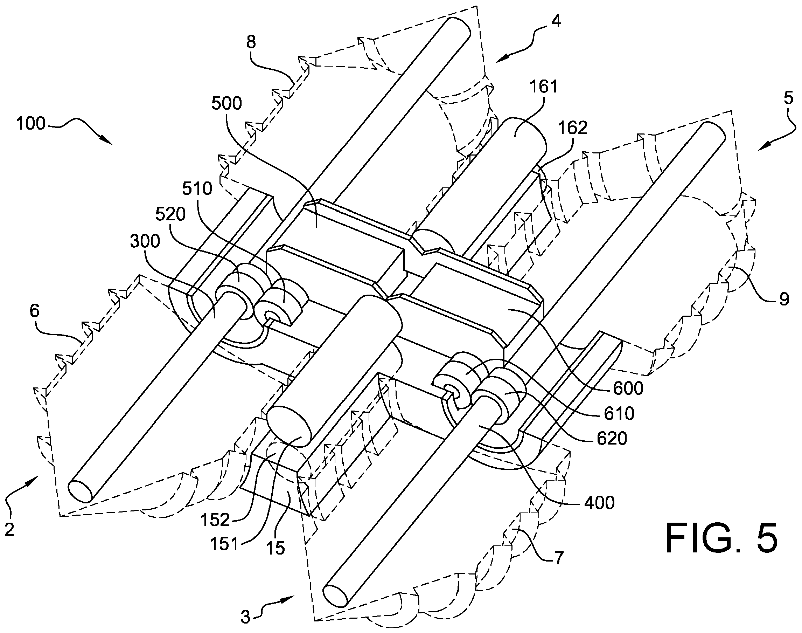

Dans un second mode de réalisation illustré sur les figures 4 et 5, les moteurs électriques et leurs sources d'énergie sont agencés à l'arrière d'une paire d'éléments de propulsion. Les moteurs sont plus précisément placés dos à dos et permettent chacun d'entraîner en rotation l'un des tambours rotatifs d'une paire d'éléments de propulsion.

Dans ce second mode de réalisation, le corps 110 comprend une paire de portions cylindriques 50, 60, et la portion de jonction transversale 70 comprend une paire de logements transversaux chacun aménagé pour accueillir un moteur électrique 500, 600. Dans le cadre de ce mode de réalisation, l'au moins une source d'énergie électrique est logée dans le compartiment 15, 16 qui accueille l'au moins un capteur. On retrouve par exemple, comme illustré sur la figure 5, deux batteries 151, 152, 161, 162 pour l'alimentation de chaque moteur 500, 600. L'au moins un capteur peut comprendre une ou plusieurs caméras accueillies dans le compartiment de manière similaire à ce qui est exposé sur la figure 3 discutée précédemment.

Dans ce second mode de réalisation également, le dispositif 100 peut ne comprendre qu'une seule paire d'éléments de propulsion et un corps placé à l'arrière de la paire d'éléments. Mais comme représenté sur les figures 4 et 5, dans ce second mode, le dispositif 100 peut comprendre une première et une deuxième paire d'éléments de propulsions agencées de manière à être symétrique entre elles par rapport à un plan transversal médian P_{T} du dispositif. Le corps 110 se retrouve alors au centre du dispositif, et présente une symétrie selon chacun des plans Ps, P_{F} et P_{T}.

Chaque moteur 500, 600 est couplé à un arbre 300, 400 solidaire du ou des éléments de propulsions 2, 4 ; 3, 5 situés d'un même côté du plan sagittal médian Ps et qui s'étend à travers chacune des portions cylindriques 50, 60 du corps 110. Le couplage est assuré par l'engrenage d'une pièce 510, 610 entraînée en rotation par le moteur sur une pièce 520, 620 porté par l'arbre. Chaque arbre 300, 400 est ainsi entraîné en rotation par l'un des moteurs électriques 500, 600, permettant de faire tourner le ou les tambours rotatifs 6, 8 ; 7, 9 situés d'un même côté du plan sagittal médian Ps.

Dans chacun des modes de réalisation décrits ci-dessus, la première et la deuxième paire d'éléments de propulsions peuvent être reliées entre elles par un mécanisme articulé afin de favoriser le franchissement des obstacles. Ce mécanisme peut être porté par le corps, en étant par exemple inséré entre les deux sous-parties mentionnées ci-dessus du corps 10 selon le premier mode de réalisation de l'invention.

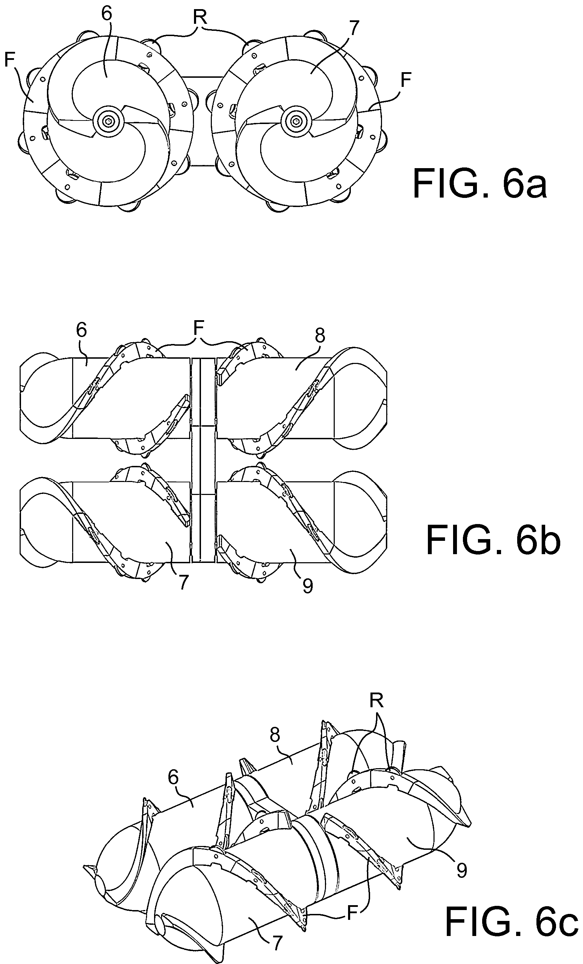

Dans une variante de réalisation de l'invention, des roues sont intégrées dans le filetage en surface d'un tambour rotatif. On a ainsi représenté sur les figures 6a, 6b et 6c des vues, respectivement de face, de dessus et de perspective, d'un dispositif conforme à cette variante.

Les roues R sont plus particulièrement intégrées dans le filetage F présent sur la surface extérieure d'un tambour rotatif 6, 7 ; 8, 9 de manière à être entraînées en rotation par un contact avec le sol lors de la rotation du tambour rotatif. Ainsi, lors d'une trajectoire vers l'avant du dispositif, la roue en contact avec le sol suit une ligne inclinée d'un angle qui correspond à l'angle d'hélice du filetage. Les roues sont ainsi montées rotatives dans le filetage autour d'un axe de rotation qui est perpendiculaire à la direction locale de l'hélice du filetage.

La présence des roues permet d'éviter le glissement du filetage du tambour rotatif sur le sol et favorise ainsi la locomotion du dispositif, notamment sur des terrains lisses. Le roulement élimine par ailleurs les efforts parasites de frottement du filetage. Les roues peuvent en outre présenter une surface caoutchouteuse sur leur périphérie destinée à être en contact avec le sol, offrant ainsi une meilleure accroche.

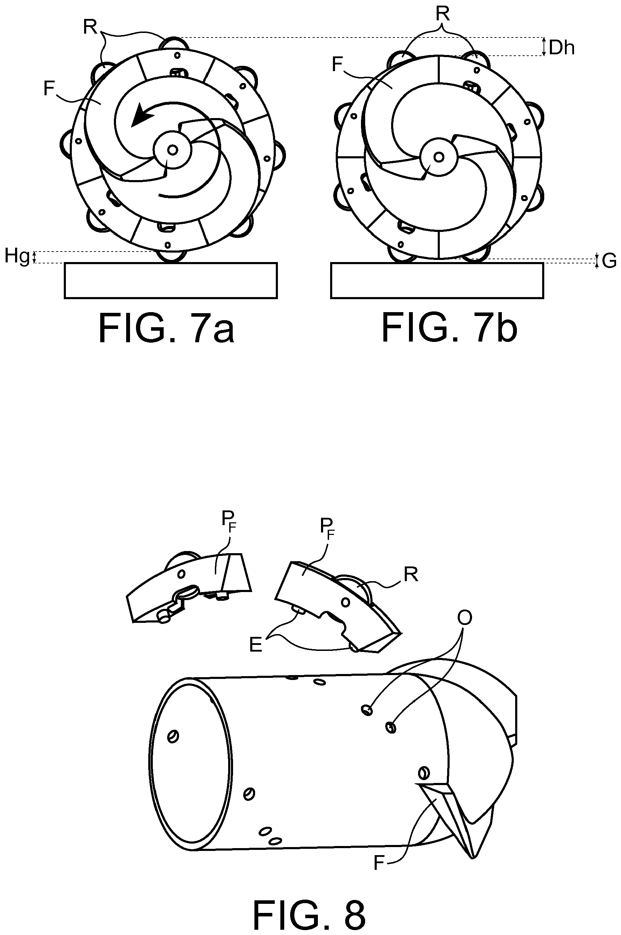

Les figures 7a et 7b représentent le mouvement vertical induit par la présence des roues R dans le filetage F. Lors de la rotation du tambour rotatif, le contact au sol va être assuré successivement par une (figure 7a) et deux roues (figure 7b). Cela induit un mouvement vertical modélisé par Dh, correspondant à la différence de hauteur entre le point haut et le point bas du tambour rotatif au cours du déplacement. Plus le nombre de roues est important, plus le mouvement est fluide et le battement vertical faible.

La valeur de garde au sol G doit être supérieure à zéro afin de garantir le contact au sol des roues en continu, évitant ainsi un contact du filetage F avec le sol. Le diamètre d'une roue, donc sa hauteur de dépasse du filet Hg, est alors directement lié au nombre de roues. Plus le nombre de roues est important, plus la hauteur de dépasse du filet Hg peut être limitée et donc plus la perturbation générée lors du passage dans un sol mou est faible.

Un nombre de roues important permet donc un déplacement plus fluide sur sol dur comme sur terrain meuble. Cependant, le poids et la complexité sont rapidement augmentés, ce qui nous amène par exemple à choisir un nombre de 8 roues comme représenté sur les figures. Ainsi, Dh et Hg sont relativement faibles, pour une complexité raisonnable.

On a représenté sur la figure 8 une autre variante de réalisation de l'invention du dispositif dans laquelle le filetage F est monté de manière amovible sur la surface extérieure d'un tambour rotatif.

Dans cette variante, le filetage F peut comporter comporte une pluralité de portions de filet, Pf et chaque portion de filet est montée de manière amovible sur la surface extérieure du tambour rotatif, par exemple par emboîtage d'ergots E présents sur une portion de filet dans des orifices O prévus sur la surface du tambour rotatif.

Les portions de filet Pf couvrent de préférence des portions angulaires similaires. Et comme représenté, des portions de filet peuvent être équipées d'une ou plusieurs roues pour assurer les avantages discutées précédemment.

Cette conception modulaire permet une maintenance plus aisée du dispositif (par exemple pour le remplacement d'une roue usée) et lui offre une certaine versatilité.

L'invention n'est pas limitée au dispositif tel que décrit ci-dessus, mais s'étend également à son utilisation pour l'inspection d'une canalisation.

## Revendications

1. Dispositif robotique (1, 100) d'inspection d'une canalisation, comportant au moins une paire d'éléments de propulsion (2, 3 ; 4, 5) comprenant chacun un tambour rotatif (6, 7 ; 8, 9) dont une surface extérieure présente un filetage (F) de vis d'Archimède, les éléments de propulsion d'une paire s'étendant dans une direction longitudinale de manière à être symétriques entre eux par rapport à un plan sagittal médian (Ps) du dispositif, le dispositif comportant en outre un corps (10, 110) associé à l'au moins une paire d'éléments de propulsion (2, 3 ; 4, 5) et dans lequel sont logés au moins un capteur (C1, C2), au moins une paire de moteurs électriques (17-20, 500, 600) pour chacun faire tourner un des tambours rotatifs (6, 7 ; 8,9) et au moins une paire de sources d'énergie électrique (21a-21c, 22a-22c ; 23a-23c, 24a-24c, 151, 152; 161, 162) pour chacune alimenter un des moteurs électriques (17-20, 500, 600), le corps étant conformé de manière à ce qu'une partie ventrale et une partie dorsale du dispositif soient symétriques entre elles par rapport à un plan frontal médian (P_{F}) du dispositif, autorisant ainsi un déplacement du dispositif indifféremment sur le ventre ou sur le dos au moyen de l'au moins une paire d'éléments de propulsion (2, 3 ; 4, 5).

2. Dispositif selon la revendication 1, dans lequel les éléments de propulsion (2, 3 ; 4, 5) sont des flotteurs.

3. Dispositif selon l'une des revendications 1 et 2, dans lequel le filetage (F) présent sur la surface extérieure d'un tambour rotatif (6, 7 ; 8, 9) comporte des portions angulaires (L) de hauteur nulle à intervalles angulaires de 360°.

4. Dispositif selon l'une des revendications 1 à 3, dans lequel le filetage (F) présent sur la surface extérieure du tambour rotatif (6, 7 ; 8, 9) y est monté de manière amovible.

5. Dispositif selon la revendication 4, dans lequel ledit filetage (F) comporte une pluralité de portions de filet, chaque portion de filet étant montée de manière amovible sur la surface extérieure du tambour rotatif.

6. Dispositif selon la revendication 5, dans lequel le montage amovible comprend un emboîtage.

7. Dispositif selon l'une des revendications 1 à 6, dans lequel des roues sont intégrées dans le filetage (F) présent sur la surface extérieure du tambour rotatif (6, 7 ; 8, 9) de manière à être entraînées en rotation par un contact avec le sol lors de la rotation du tambour rotatif.

8. Dispositif selon l'une des revendications 1 à 7, comprenant une première (2, 3) et une deuxième (4, 5) paire d'éléments de propulsions agencées de manière à être symétriques entre elles par rapport à un plan transversal médian (P_{T}) du dispositif.

9. Dispositif selon l'une des revendications 1 à 8, dans lequel le corps (10, 100) comprend au moins une paire de portions cylindriques (11, 12; 13, 14; 50, 60) de diamètre inférieur à celui des tambours rotatifs (6, 7 ; 8, 9), les portions cylindriques d'une paire s'étendant dans la direction longitudinale et étant reliées entre elles par une portion de jonction transversale (71, 70) qui présente une hauteur dans le plan sagittal médian (Ps) inférieur au diamètre des tambours rotatifs, et dans lequel le corps comprend en outre un compartiment (15, 16) dans lequel est logé l'au moins un capteur (C1, C2), le compartiment (15, 16) s'étendant depuis la portion de jonction dans la direction longitudinale entre les éléments de propulsion.

10. Dispositif selon la revendication 9, dans lequel chaque portion cylindrique (11, 12 ; 13, 14) forme un logement longitudinal monté à l'intérieur d'un des tambours rotatifs et aménagé pour accueillir un des moteurs électriques (17, 18 ; 19, 20) pour faire tourner le tambour rotatif correspondant et une des sources d'énergie électrique (21a-21c, 22a-22c ; 23a-23c, 24a-24c) pour alimenter le moteur électrique.

11. Dispositif selon la revendication 10, dans lequel une des sources d'énergie électrique comprend une pluralité de batteries (24a, 24b, 24c), et dans lequel chaque logement longitudinal comporte un espace de réception (25) d'un des moteurs électriques et un espace de réception (26a, 26b, 26c) de chacune des batteries, les espaces de réception des batteries étant agencés de manière équi-répartie le long d'une circonférence entourant l'espace de réception du moteur électrique.

12. Dispositif selon la revendication 9, dans lequel la portion de jonction transversale (70) comprend une paire de logements transversaux chacun aménagé pour accueillir un des moteurs électriques (500, 600), et dans lequel au moins une des sources d'énergie électrique (151, 152, 161, 162) est logée dans le compartiment (15, 16).

13. Dispositif selon la revendication 12 prise en combinaison avec la revendication 8, comprenant une paire d'arbres (300, 400) chacun couplé aux éléments de propulsions (2, 4; 3, 5) situés d'un même côté du plan sagittal médian (Ps), chaque arbre (300, 400) étant entraîné en rotation par l'un des moteurs électriques (500, 600).

14. Utilisation du dispositif selon l'une des revendications 1 à 13 pour l'inspection d'une canalisation.

## Patentansprüche

1. Robotervorrichtung (1, 100) zur Inspektion eines Rohrnetzes, umfassend wenigstens ein Paar von Antriebselementen (2, 3; 4, 5), die jeweils eine Drehtrommel (6, 7; 8, 9) umfassen, von der eine Außenoberfläche ein archimedisches Schraubengewinde (F) aufweist, wobei sich die Antriebselemente eines Paars in einer Längsrichtung derart erstrecken, dass sie bezogen auf eine mittlere Sagittalebene (Pₛ) der Vorrichtung zueinander symmetrisch sind, wobei die Vorrichtung ferner einen Körper (10, 110) umfasst, der dem wenigstens einen Paar von Antriebselementen (2, 3; 4, 5) zugeordnet ist und in dem wenigstens ein Sensor (C1, C2) untergebracht ist, wenigstens ein Paar von Elektromotoren (17-20, 500, 600), um jeweils eine der Drehtrommeln (6, 7; 8, 9) in Drehung zu versetzen, und wenigstens ein Paar von elektrischen Energiequellen (21a-21c, 22a-22c; 23a-23c, 24a-24c, 151, 152; 161, 162), um jeweils einen der Elektromotoren (1720, 500, 600) zu versorgen, wobei der Körper dazu ausgelegt ist, dass ein Bauchteil und ein Rückenteil der Vorrichtung mit Bezug zu einer vorderen Mittelebene (P_{F}) der Vorrichtung zueinander symmetrisch sind, was somit eine Verlagerung der Vorrichtung in gleicher Weise auf dem Bauch oder auf dem Rücken mit Hilte des wenigstens einen Paars von Antriebselementen (2, 3; 4, 5) ermöglicht.

2. Vorrichtung nach Anspruch 1, bei der die Antriebselemente (2, 3; 4, 5) Schwimmer sind.

3. Vorrichtung nach einem der Ansprüche 1 und 2, bei der das Gewinde (F), das auf der Außenoberfläche einer Drehtrommel (6, 7; 8, 9) vorhanden ist, anguläre Bereiche (L) der Höhe Null in angulären Intervallen von 360° umfasst.

4. Vorrichtung nach einem der Ansprüche 1 bis 3, bei der das Gewinde (F), das auf der Außenoberfläche der Drehtrommel (6, 7; 8, 9) vorhanden ist, dort auf lösbare Weise montiert ist.

5. Vorrichtung nach Anspruch 4, bei der das Gewinde (F) eine Mehrzahl von Gewindegangbereichen umfasst, wobei jeder Gewindegangbereich auf lösbare Weise auf der Außenoberfläche der Drehtrommel montiert ist.

6. Vorrichtung nach Anspruch 5, bei der die lösbare Montage eine Passung umfasst.

7. Vorrichtung nach einem der Ansprüche 1 bis 6, bei der Räder in das Gewinde (F) integriert sind, das auf der Außenoberfläche der Drehtrommel (6, 7; 8, 9) vorhanden ist, derart, dass sie durch einen Kontakt mit dem Boden während der Drehung der Drehtrommel in Drehung angetrieben werden.

8. Vorrichtung nach einem der Ansprüche 1 bis 7, umfassend ein erstes (2, 3) und ein zweites (4, 5) Paar von Antriebselementen, die derart angeordnet sind, dass sie mit Bezug zu einer transversalen Mittelebene (P_{T}) der Vorrichtung zueinander symmetrisch sind.

9. Vorrichtung nach einem der Ansprüche 1 bis 8, bei der der Körper (10, 100) wenigstens ein Paar von zylindrischen Bereichen (11, 12; 13, 14; 50, 60) mit einem Durchmesser kleiner als jener der Drehtrommeln (6, 7; 8, 9) umfasst, wobei sich die zylindrischen Bereiche eines Paars in der Längsrichtung erstrecken und miteinander durch einen Transversalverbindungsbereich (71, 70) verbunden sind, der eine Höhe in der sagittalen Mittelebene (Ps) kleiner als der Durchmesser der Drehtrommeln aufweist, und bei der der Körper ferner eine Kammer (15, 16) umfasst, in der der wenigstens eine Sensor (C1, C2) untergebracht ist, wobei sich die Kammer (15, 16) ausgehend von dem Verbindungsbereich in der Längsrichtung zwischen den Antriebselementen erstreckt.

10. Vorrichtung nach Anspruch 9, bei der jeder zylindrische Bereich (11, 12, 13, 14) eine Längsunterbringung bildet, die im Inneren einer der Drehtrommeln montiert und dazu ausgelegt ist, einen der Elektromotoren (17, 18; 19, 20) aufzunehmen, um die entsprechende Drehtrommel zu drehen, sowie eine der elektrischen Energiequellen (21a-21c, 22a-22c; 23a-23c, 24a-24c) zum Versorgen des Elektromotors.

11. Vorrichtung nach Anspruch 10, bei der eine der elektrischen Energiequellen eine Mehrzahl von Batterien (24a, 24b, 24c) umfasst, und bei der jede Längsunterbringung einen Aufnahmeraum (25) für einen der Elektromotoren umfasst, sowie einen Aufnahmeraum (26a, 26b, 26c) für jede der Batterien, wobei die Aufnahmeräume für die Batterien in einer gleich verteilten Weise entlang eines Umfangs angeordnet sind, der den Aufnahmeraum für den Elektromotor umgibt.

12. Vorrichtung nach Anspruch 9, bei der der Transversalverbindungsbereich (70) ein Paar von Transversalunterbringungen umfasst, die jeweils dazu ausgelegt sind, einen der Elektromotoren (500, 600) aufzunehmen, und bei der wenigstens eine der elektrischen Energiequellen (151, 152, 161, 162) in der Kammer (15, 16) untergebracht ist.

13. Vorrichtung nach Anspruch 12 in Kombination mit Anspruch 8, umfassend ein Paar von Wellen (300, 400), die jeweils gekoppelt sind mit den Antriebselementen (2, 4; 3, 5), die auf ein und derselben Seite der sagittalen Mittelebene (Ps) angeordnet sind, wobei jede Welle (300, 400) durch einen der Elektromotoren (500, 600) zur Drehung angetrieben wird.

14. Verwendung der Vorrichtung nach einem der Ansprüche 1 bis 13 für die Inspektion eines Rohrnetzes.

## Claims

1. Robotic device (1, 100) for inspecting a pipe, comprising at least one pair of propulsion elements (2, 3; 4, 5) each including a rotary drum (6, 7; 8, 9) an outer surface of which has an Archimedes screw thread (F), the propulsion elements of a pair extending in a longitudinal direction such that they are symmetrical with one another relative to a median sagittal plane (P_{S}) of the device, the device further comprising a body (10, 110) associated with the at least one pair of propulsion elements (2,3; 4,5) and in which are inserted at least one sensor (C1, C2), at least one pair of electric motors (17-20, 500, 600) each capable of rotating one of the rotary drums (6,7; 8,9) and at least one pair of electric power sources (21a-21c, 22a-22c; 23a-23c, 24a-24c, 151, 152; 161, 162) each capable of powering one of the electric motors (17,20, 500, 600), the body being shaped such that a ventral portion and a dorsal portion of the device are symmetrical with one another relative to a median frontal plane (P_{F}) of the device, thus allowing the device to be displaced indifferently on its front or on its back by means of the at least one pair of propulsion elements (2,3; 4,5).

2. Device according to claim 1, wherein the propulsion elements (2, 3; 4, 5) are floats.

3. Device according to either claim 1 or claim 2, wherein the threading (F) present on the outer surface of a rotary drum (6, 7; 8, 9) comprises angular portions (L) of a zero height at angular intervals of 360°.

4. Device according to one of claims 1 to 3, wherein the threading (F) present on the outer surface of the rotary drum (6, 7; 8, 9) is mounted thereon in a removable manner.

5. Device according to claim 4, wherein said threading (F) comprises a plurality of thread portions, each thread portion being mounted in a removable manner on the outer surface of the rotary drum.

6. Device according to claim 5, wherein the removable mounting includes an interlocking step.

7. Device according to one of claims 1 to 6, wherein wheels are incorporated into the threading (F) present on the outer surface of the rotary drum (6, 7; 8, 9) so as to be driven in rotation by a contact with the ground during the rotation of the rotary drum.

8. Device according to one of claims 1 to 7, comprising a first (2, 3) and a second (4, 5) pair of propulsion elements arranged such that they are symmetrical with one another relative to a median transverse plane (P_{T}) of the device.

9. Device according to one of claims 1 to 8, wherein the body (10, 100) comprises at least one pair of cylindrical portions (11, 12; 13, 14; 50, 60) having a diameter that is less than that of the rotary drums (6, 7; 8, 9), the cylindrical portions of a pair extending in the longitudinal direction and being connected to one another by a transverse junction portion (71, 70) that has a height in the median sagittal plane (Ps) that is less than the diameter of the rotary drums, and wherein the body further comprises a compartment (15, 16) in which is housed the at least one sensor (C1, C2), the compartment (15, 16) extending from the junction portion in the longitudinal direction between the propulsion elements.

10. Device according to claim 9, wherein each cylindrical portion (11, 12; 13, 14) forms a longitudinal recess mounted inside one of the rotary drums and designed to receive one of the electric motors (17, 18; 19, 20) capable of rotating the corresponding rotary drum and one of the electric power sources (21a-21c, 22a-22c; 23a-23c, 24a-24c) capable of powering the electric motor.

11. Device according to claim 10, wherein one of the electric power sources comprises a plurality of batteries (24a, 24b, 24c), and wherein each longitudinal recess comprises a space (25) for receiving one of the electric motors and a space (26a, 26b, 26c) for receiving each of the batteries, the spaces for receiving the batteries being arranged such that they are evenly distributed along a circumference encircling the space for receiving the electric motor.

12. Device according to claim 9, wherein the transverse junction portion (70) comprises a pair of transverse recesses, each designed to receive one of the electric motors (500, 600), and wherein at least one of the electric power sources (151, 152, 161, 162) is housed in the compartment (15, 16).

13. Device according to claim 12, taken in combination with claim 8, comprising a pair of shafts (300, 400), each coupled to the propulsion elements (2, 4; 3, 5) located on the same side of the median sagittal plane (Ps), each shaft (300, 400) being driven in rotation by one of the electric motors (500, 600).

14. Use of the device according to one of claims 1 to 13 to inspect a pipe.
